(19) Europäisches Patentamt / European Patent Office / Office européen des brevets

(11) **EP 3 189 115 B1**

(12) **EUROPEAN PATENT SPECIFICATION**

(45) Date of publication and mention
of the grant of the patent:
**11.05.2022 Bulletin 2022/19**

(21) Application number: **15838786.0**

(22) Date of filing: **04.09.2015**

(51) International Patent Classification (IPC):
*C09J 167/00* (2006.01)    *C09J 123/08* (2006.01)
*C08K 5/09* (2006.01)

(52) Cooperative Patent Classification (CPC):
(C-Sets available)
**C09J 167/04; C08L 51/06; C08L 67/04;
C08L 91/06; C08L 93/04; C09J 7/35; C09J 123/08;
C09J 151/06; C09J 167/00;** Y02P 20/582    (Cont.)

(86) International application number:
**PCT/US2015/048549**

(87) International publication number:
**WO 2016/037062 (10.03.2016 Gazette 2016/10)**

(54) **HOT MELT ADHESIVE COMPOSITIONS AND USE THEREOF**

SCHMELZKLEBERZUSAMMENSETZUNGEN UND VERWENDUNG DAVON

COMPOSITIONS ADHÉSIVES THERMOFUSIBLES ET LEUR UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.09.2014 US 201462046317 P**

(43) Date of publication of application:
**12.07.2017 Bulletin 2017/28**

(73) Proprietor: **Henkel IP & Holding GmbH
40589 Düsseldorf (DE)**

(72) Inventors:
• **YANG, Hui
Middlesex, New Jersey 08846 (US)**
• **EODICE, Andrea Keys
Hillsborough, New Jersey 08844 (US)**

(74) Representative: **Henkel IP Department
c/o Henkel AG & Co. KGaA
Henkelstraße 67
40589 Düsseldorf (DE)**

(56) References cited:
**WO-A1-2009/100414    WO-A1-2013/162059
WO-A1-2014/051160    CN-A- 103 045 111
CN-A- 103 205 210    US-A- 5 252 646
US-A1- 2012 328 805**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 123/08, C08L 91/06, C08L 67/04,
C08L 51/06;
C09J 151/06, C08L 91/06, C08L 67/04;
C09J 167/00, C08L 51/06, C08L 91/06,
C08L 93/04;
C09J 167/04, C08L 51/06, C08L 91/06, C08L 93/04**

**Description**

FIELD OF THE INVENTION

The present invention relates to an environmentally-friendly hot melt adhesive. The hot melt adhesive contains significant portions of renewable components, and the adhesive has sufficient uniformity, adhesion and thermal stability.

BACKGROUND OF THE INVENTION

The primary raw materials used to manufacture hot melt adhesives are polymers, tackifiers and waxes. The raw materials are typically synthesized from petroleum, using energy-intensive processes. In addition, a large percentage of the petroleum is transported from various parts of the world, which increases the carbon footprint. Generally, very few raw materials in hot melt adhesives are made from renewable resources and thus, have a negative impact on the environment.

There is an increased desire to reduce carbon footprint and to produce environmentally sound products. For products touted as environmentally sound packages, it is desirable to also contain environmentally sound adhesives in the package. One method of making an environmentally sound adhesives is to decrease carbon footprint by forming the hot melt adhesives from all or mostly renewable resources.

Polylactic acid is made from renewable resources; however, as described in WO 95/10577, polylactic acid-based adhesives are thermally unstable. While rapid biodegradation is desirable upon disposal, the adhesive must remain stable during application and use. Neat polylactic acid is also brittle. U.S. Patent Numbers 5,252,646 and 5,312,850 teach to add large quantities of plasticzers and tackifiers in the composition to soften the adhesives; however, the adhesives are still thermally unstable. Adhesives made in accordance with U.S. Patent Numbers 5,252,646 and 5,169,889 result in 36% viscosity change upon exposure to 150°C after 24 hours, and up to 96% viscosity change at after 72 hours. Document WO 2013/162059 discloses compositions that among others comprise rubber-based elastomers.

Moreover, polylactic acid remains incompatible with other components of the adhesives, e.g., tackifiers and waxes, and this leads to phase separation upon heating.

The present invention seeks to provide a hot melt adhesive that is uniform without any phase separation, non-brittle and thermally-stable adhesive made from substantially renewable raw materials. This hot melt adhesive can be used to form a more an environmentally sound packaging materials.

SUMMARY OF THE INVENTION

The present invention relates to a hot melt adhesive that utilizes renewable raw materials. The hot melt adhesive has similar performance properties of traditional hot melt adhesives formed from petroleum-based raw materials.

The present invention relates to a hot melt adhesive composition comprising: (a) a polyester-based resin, wherein the polyester-based resin is selected from the group consisting of homopolymer or copolymer of lactic acid, butylene succinate, butylene succinate-adipiate, butylene succinate-terephthalate, ethylene succinate, butylene succinate-carbonate, glycolic acid, caprolactone, hydroxybutyric acid-hydroxyvaleric acid and mixtures thereof; (b) a functionalized polyolefin or functionalized wax, wherein the functionalized polyolefin or the functionalized wax comprises a polar functional group selected from carboxylic acid group, acid anhydride group, amino group, imino group, hydroxyl group or epoxy group; and (c) a tackifier. The viscosity $(v_{final} - v_{initial})/v_{initial}$ of the hot melt adhesive remains stable and changes less than 30% after the hot melt adhesive is aged at 160 °C (320°F) for at least 72 hours; and wherein the adhesive is essentially free of any rubber-based elastomers.

In another embodiment, there is provided a hot melt adhesive composition comprising: (a) about 5 to about 80 wt% of a polylactic acid; (b) about 0.1 to about 25 wt% of a functionalized polyolefin or a functionalized wax; (c) a tackifier; and (d) up to about 50 wt% of a non-functionalized polyolefin having C2-C20 monomers. The hot melt adhesive is substantially free of any rubber elastomer. The viscosity $(v_{final} - v_{initial})/v_{initial}$ of the hot melt adhesive remains stable and changes less than 30% after the hot melt adhesive is aged at 160 °C (320°F) for at least 72 hours.

Yet another embodiment is directed to a packaging article comprising a substrate and hot melt adhesive composition comprising (a) a polyester-based resin; (b) a functionalized polyolefin of a functionalized wax; and (c) a tackifier. The article is a case, carton, tray, label, bookbinding or bag.

Another embodiment is directed to a process for manufacturing an article comprising the steps of: (1) forming an adhesive at about 135 °C (275°F) to about 204 °C (400°F) comprising (i) a polyester-based resin, (ii) a functionalized polyolefin or a functionalized wax, and (iii) a tackifier under heat; (2) applying the adhesive at about 135 °C (275°F) to about 204 °C (400°F) onto a substrate; and (3) applying a second substrate onto the applied adhesive. The substrate is a paper, paperboard, plastic film, metal foil, release paper, cotton, or nonwoven fabric. The viscosity $(v_{final} - v_{initial})/v_{initial}$ of the hot melt adhesive remains stable and changes less than 30% after the hot melt adhesive is aged at 160 °C (320°F) for at least 72 hours.

DETAILED DESCRIPTION OF THE INVENTION

The present invention provides a hot melt adhesive composition made from renewable raw materials that provides thermal stability over time.

The adhesive comprises a polyester-based resin. In one embodiment, the polyester-based resin is an amorphous polyester-based resin. In other embodiment, the polyester-based resin is a semi-crystalline polyester-based resin. Polyester-based resins include homopolymer or copolymers of lactic acid, butylene succinate, butylene succinate-adipiate, butylene succinate-terephthalate, ethylene succinate, butylene succinate-carbonate, glycolic acid, caprolactone, hydroxybutyric acid, hydroxyvaleric acid, hexanoate butyrate, hydroxybutyric acid-hydroxyvaleric acid and mixtures thereof.

The term "lactic acid" refers to a compound of the formula $CH_3CH(OH)CO_2H$. Lactic acid can be one of two optical isomers (L-(+)-lactic acid or (S)-lactic acid, and its mirror image D-(-)-lactic acid or (R)-lactic acid), or the lactic acid can be scalemic or racemic. The term "polylactic acid" or "polylactide" refers to thermoplastic polyester of the formula $--(CH(CH_3)C(=O)--O)_n--$, where n is such that the molecular weight of the polymer is about 500 to about 1,000,000, and typically about 10,000 to about 1,000,000. Poly-L-lactide is the product resulting from the polymerization of L,L-lactide (also known as L-lactide). The polymerization methods described herein can be used to polymerize polylactic acid or a polylactic acid copolymer. Examples of specific homopolymers include poly(L-lactic acid), poly(DL-lactic acid), syndiotactic poly(DL-lactic acid), and atactic poly(DL-lactic acid).

The above polylactic acid-based resin is a polymer comprising L-lactic acid and/or D-lactic acid as main constituents, and may comprise other copolymerization components other than lactic acid. Examples of such other copolymerization component units include polyvalent carboxylic acids, polyhydric alcohols, hydroxycarboxylic acids and lactones. Specific examples are units produced from polyvalent carboxylic acids, such as oxalic acid, malonic acid, succinic acid, glutaric acid, adipic acid, azelaic acid, sebacic acid, dodecanedionic acid, fumaric acid, cyclohexanedicarboxylic acid, terephthalic acid, isophthalic acid, phthalic acid, 2,6-naphthalenedicarboxylic acid, anthracenedicarboxylic acid, 5-sodium sulfoisophthalic acid and 5-tetrabutylphosphonium sulfoisophthalic acid; polyhydric alcohols, such as ethylene glycol, propylene glycol, butanediol, heptanediol, hexanediol, octanediol, nonanediol, decanediol, 1,4-cyclohexanedimethanol, neopentyl glycol, glycerin, pentaerythritol, aromatic polyhydric alcohols obtained by the addition reaction of bisphenol A or bisphenol with ethylene oxide, diethylene glycol, triethylene glycol, polyethylene glycol, polypropylene glycol and polytetramethylene glycol; hydroxycarboxylic acids, such as glycolic acid, 3-hydroxybutyric acid, 4-hydroxybutyric acid, 4-hydroxyvaleric acid, 6-hydroxycaproic acid and hydroxybenzoic acid; and lactones, such as glycolide, ε-caprolactone glycolide, s aprolactone, β-propiolactone, δ-butyrolactone, β- or γ-butyrolactone, pivalolactone and δ-valerolactone, and the like. The content of such other copolymerization units other than lactic acid is generally from 0 to 50 mol % and preferably 0 to 30 mol %, based on 100 mol % of total monomer units.

The polyester-based resin is present at least about 5 wt% of the total weight of the adhesive; however, the content of the polyester-based resin may be varied to formulate an adhesive to suit its application conditions. Preferably, the amount of the polyester-based resin is greater than non-renewable raw materials in the adhesive to minimize carbon footprint.

In one embodiment, the polylactic acid is substantially amorphous with negligible heat of crystallization and recrystallization. The amorphous polylactic acid does not have ordered three-dimensional structures in the solid state. Their molecular chains are arranged in a completely random fashion in space. In another embodiment, the polylactic acid is a semi-crystalline polylactic acid. Semi-crystalline polylactic acid exhibits a melting point (Tm), whereas the melting point is absent for amorphous polylactic acid. Moreover, unlike the melting transition of the semi-crystalline materials, the glass transition of amorphous polylactic acid does not have an enthalpy change ($\Delta$H) associated with it.

The melting point, Tm, and the enthalpy or heat of melting ($\Delta$Hm) can be determined by Differential Scanning Calorimetry (DSC). The technique is well known to those skilled in the art and is well described in scientific literature.

The adhesive may additionally include a non-functionalized polyolefin in the adhesive. A non-functionalized polyolefin has a structural unit based on an olefin, and may be an olefin homopolymer or a copolymer. Ethylene or a monomeric structure having 3 to 20 carbon atoms are preferred as olefin. Examples of the olefin having 3 to 20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3- methyl-1-pentene, 3-ethyl-1-pentene, 4-methyl-1-pentene, 4-methyl-1-hexene, 4,4- dimethyl-1-hexene, 4,4-dimethyl-1-pentene, 4-ethyl-1-hexene, 3-ethyl-1-hexene, 9- methyl-1-decene, 11-methyl-1-dodecene, 12-ethyl-1-tetradecene and combinations thereof. While these may be used alone or in combination of two or more of these, ethylene or propylene is preferably contained as the olefin.

Non-functional polyolefin may be present up to about 50 wt% in the adhesive. Depending on the application condition, the non-functional polyolefin amount varies in the adhesive.

The adhesive further comprise a functionalized polyolefin or a functionalized wax. Polyolefin typically has a weight average molecular weight in the range greater than about 2000 Daltons and wax has a weight average molecular weight less than about 2000 Daltons.

Functionalized polyolefin has a base structural unit of a non-functionalized polyolefin, and may be an olefin homopolymer or a copolymer obtained by copolymerizing a compound copolymerizable with an olefin. The functionalized polyolefin or wax formed by monomers or comonomers of $C_2$ - $C_{20}$. Preferably, the functionalized polyolefin or wax has monomers or comonomers selected from $C_2$, $C_3$, $C_4$ and $C_8$.

The functionalized polyolefin or the functionalized wax has been modified with a polar functional group by synthesizing an olefin-based chain, and then introducing a polar functional group later by either reaction or by grafting onto the olefin chain. The polar functional group may be introduced into an end of the olefin chain or into the structural unit at inside of the chain.

Examples of the "polar functional group" for the functionalized polyolefin include carboxylic acid group, acid anhydride group, amino group, imino group, hydroxyl group or epoxy group. Preferred polar functional group for the functionalized polyolefin or wax include maleic anhydride, carboxylic acid, acrylic acid, maleic acid, ethyl acrylate, vinyl acetate, ethylene-glycidyl methacrylate, and mixtures thereof. The polar functional group may be introduced into an end of the olefin chain through grafting or into the structural unit at inside of the olefin chain other than the ends of the olefin chain. The level of polar functional group ranges from about 0.1 wt% to up to about 35 wt% of the polymer or the wax.

Non-limiting functionalized polyolefin also include vinyl related (co)polymers grafted onto olefin chains, ethylene/methyl acrylate/glycidyl methacrylate copolymerized resin, an ethylene-glycidyl methacrylate-styrene copolymer and a maleic anhydride-modified polyethylene copolymer. Exemplary functionalized polyolefins and waxes include maleic anhydride grafted onto polyethylenes, ethyl acrylate grafted onto polyethylene, vinyl acetate grafted onto polyethylene, a mixtures of ethyl acrylate and maleic anhydride grafted onto polyethylene, and copolymers of ethylene and acrylic acid. Preferred functionalized polyolefin waxes include maleic anhydride grafted polyethylene, ethyl acrylate grated polyethylene, vinyl acetate grafted polyethylene, ethyl acrylate and maleic anhydride grafted polyethylene, and copolymers of ethylene and acrylic acid.

The functional polyolefins and waxes are available under the trade names AFFINITY GA 1000R, GA 1900, and GA 1950 from Dow, MODIPER series from NOF Corporation, BOND FAST series from Sumitomo Chemical, FUSABOND series from DuPont, and A-C 500, 600, 900 and 5000 series from Honeywell.

The ratio of the polyester-based resins to the functionalized polyolefin or wax is in the range of about 20:1 to 1:20. Again, maximizing the renewable polyester-based resins in the adhesive reduces the overall carbon footprint.

The adhesive is essentially free of any rubber-based elastomers. The rubber-based elastomer is comprises a vinyl-based aromatic hydrocarbon block and a conjugated diene block.

Tackifier in the hot melt adhesive of the present invention is not particularly limited. Tackfiiers should be chosen based on the compatibility of the tackifying resin and the polyester-based resins. In addition, stability, viscosity, color, softening point, and odor should also be considered when selecting a tackifier.

Preferred tackifiers for the polyester based resins include rosin esters, terpene, aliphatic or aromatic hydrocarbon resins. In one embodiment, preferred tackifiers are derived from aged tree stumps, tree sap, wood sources and citrus fruit, which are renewable resources.

Examples of the tackifier resin can include natural rosins, rosin esters, modified rosins, hydrogenated rosins, glycerol esters of natural rosins, glycerol esters of modified rosins, pentaerythritol esters of natural rosins, pentaerythritol esters of modified rosins, pentaerythritol esters of hydrogenated rosins, copolymers of natural terpenes, three-dimensional polymers of natural terpenes, hydrogenated derivatives of copolymers of hydrogenated terpenes, polyterpene resins, terpene-phenolics, polyterpenes, hydrogenated derivatives of phenol-based modified terpene resins, styrenated terpene, amorphous petroleum hydrocarbon resins, hydrogenated derivatives of amorphous petroleum hydrocarbon resins, aromatic petroleum hydrocarbon resins, hydrogenated derivatives of aromatic petroleum hydrocarbon resins, cyclic amorphous petroleum hydrocarbon resins and hydrogenated derivatives of cyclic amorphous petroleum hydrocarbon resins.

Depending on the application condition, the tackifier amount varies in the adhesive. Typically, the tackifier is present from about 10 to about 60 wt%, based on the total weight of the adhesive.

The adhesive, optionally, comprises a non-functionalized wax. The type and amount of wax in the adhesive is not particularly limited and may be modified to suit the application conditions and needs. In one embodiment, the adhesive comprises synthetic waxes, such as Fischer-Tropsch waxes and polyolefin waxes (polyethylene waxes and polypropylene waxes); petroleum waxes, such as paraffin waxes and microcrystalline waxes. In another embodiment, and preferably, the wax is derived from a renewable resource such as animals and plant that contain esters of carboxylic acids and long chain alcohols or mixtures of substituted hydrocarbons, e.g., long chain fatty acids and primary alcohols. Preferred wax includes carnauba wax, palm wax, castor wax, and soy wax. In another embodiment, a mixture of waxes, both petroleum-derived and animal/plant-derived waxes may be utilized in the adhesive. Again, maximizing the renewable raw material in the adhesive reduces the overall carbon footprint.

The adhesive of the instant invention may further comprise various additives. Non-limiting examples include antioxidants, stabilizers, fillers, additives, pigments, dyestuffs, polymeric additives, defoamers, preservatives, thickeners, rheology modifiers, humectants, nucleating agent, antiblock, processing aids, UV stabilizers, neutralizers, lubricants, surfactants and adhesion promoters.

Preferred antioxidants include thioesters, phosphates, aromatic amines, hindered phenols, tetrakis (methylene 3-(3',5'-di-t-butyl-4 hydroxyphenyl)propionate)methane, 2,2'-ethyldenebis (4,6-di-tertiarybutylphenol), 1,1-3-tris(2-methyl-4-hydroxy-5-t-butylephenyl) butane, 1,3,5-trimethyl2,4,6,tris(3,5-tertbutyl-4-hydroxybenzyl)benzene, dilaurylthiodipropionate, pentaerythritol tetrakis(beta-laurylthiopropionate), alkyl-aryldi-and polyphosphates, thiophosphites, and combinations or derivatives thereof.

While a plasticizer may be added, it is not a necessary component to soften or to decrease the brittleness of the adhesive. It is well known that polylactic acid is brittle, and thus, adhesion remains as a challenge for polylactic acid-based adhesives. The plasticizer is not particularly limited as long as it is compatible with other components in the adhesive. Examples of the plasticizer include colorless and odorless paraffin-based oils, naphthene-based oils and aromatic oils.

The adhesive of the invention forms as a uniform adhesive and remains shelf-stable in a single, homogeneous material that does not phase separate into distinct, separate layers. The hot melt adhesives are typically made and stored in a tank for several days and thus, it is desirable to maintain a uniform adhesive throughout the tank for a prolonged duration. Applying phase separated adhesives onto substrates may lead to inconsistent and unreliable performances properties of the adhesives. The polyester-based resins remain miscible in the inventive adhesive with other components in a uniform phase for a prolonged duration under heat. Without being bound to any particular theory, it is believed that the functionalized polyolefin compatibilizes with the polylactic acid in the adhesive. The functionalized polyolefin and the polyester-based resin forms a colloidal dispersion, and a micelle-like structure is formed. The polyester-based resin particles are surrounded by the polar functional groups of the functionalized polyolefin and the non-polar tails branch out from the polar portion of the micelle structure. Due to the stabilized particles, low polarity materials, e.g., tackifiers, polyolefins, waxes, can be further included in the adhesive without forming a phase separated, incompatible system. Moreover, polyester-based resin's brittleness is modified from the micelle structure and the adhesive is more flexible.

As a further preferred mode of the present invention, the hot melt adhesive has an initial viscosity (or melt viscosity) at 160°C of 100,000 mPa-s or less, preferably less than about 30,000 mPa-s, more preferably less than about 10,000 mPa-s, and most preferably less than about 5,000 mPa-s. The viscosity (or melt viscosity) at 160°C herein means a value measured by a Brookfield viscometer using a No. 27 spindle.

The viscosity of the hot melt adhesive of the invention remains shelf-stable for a prolonged time. Even after exposing the adhesive to an aging condition, 320°F (160°C) for at least 72 hours, the viscosity of the adhesive remains relatively unchanged, indicating that the adhesive is shelf stable. The viscosity of the hot melt adhesive (as shown as (*i*)) is less than 30%, 29%, 28%, 27%, 26%, 25%, 24%, 23%, 22%, 21%, 20%, 19%, 18%, 17%, 16%, 15%, 14%, 13%, 12%, 11%, 10%.

$$\frac{(V_{final} - V_{initial})}{V_{initial}} \qquad\qquad (i)$$

It is well known that polylactic acid is sensitive to water and moisture. Upon exposure to air, polylactic acid degrades upon exposure to heat, and thus, conventional polylactic-based adhesives tend to decompose under aging conditions. As such, the viscosity of conventional polylactic-based adhesive decreases significantly within only a few hours upon exposure to heat. Surprisingly, the hot melt adhesive of the invention remains shelf stable and remains in a uniform phase and does not substantially decompose even when exposed to heat for a prolonged time.

The hot melt adhesive may be formed by blending a polyester-based resin, a functionalized polyolefin or wax, a tackifier, and optionally a non-functionalized polyolefin and additives together at about 275°F (135°C) to about 400°F (204°C), using a generally known method for producing a hot melt adhesive. The order of adding the components, the heating method and the like are not particularly limited.

The method for applying the hot melt adhesive is not particularly limited. The adhesive is applied onto first substrate and then a second substrate is applied onto the first substrate, whereby the adhesive is interposed between the two substrates. Such application methods may be broadly divided into contact application and noncontact application. The "contact application" refers to an application method in which an ejection machine is brought into contact with a member or a film when the hot melt adhesive is applied. Examples of the contact application method include slot coater coating and roll coater coating. The "noncontact application" refers to an application method in which an ejection machine is not brought into contact with a member or a film when the hot melt adhesive is applied. Examples of the noncontact application method can include spiral coating which allows coatings in the form of a spiral, omega coating and control seam coating which allows coatings in the form of a wave, slot spray coating and curtain spray coating which allows coatings in the form of a plane, and dot coating which allows coatings in the form of dots. Substrates include virgin and recycled Kraft paper, high and low density Kraft, chipboard and various types of treated and coated Kraft and chipboard, plastic film, wood, metal foil, release paper, cotton, nonwoven fabric, composite materials and the like. These composite materials may include chipboard laminated to an aluminum foil which is further laminated to film materials such as polyethylene, Mylar, polypropylene, polyvinylidene chloride, ethylene vinyl acetate and various other types of films.

The hot melt adhesive is particularly useful as a fast setting (setting under 10 seconds), and non-pressure sensitive adhesive for packaging articles. The hot melt adhesive may be widely used in converting, cigarette manufacture, bookbinding, bag ending and in nonwoven markets. The adhesive finds particular use as case, carton, and tray forming adhesives, and as sealing adhesives, including heat sealing applications, for example in the packaging of cereals, cracker and beer products. Encompassed by the invention are containers, e.g., cartons, cases, boxes, bags, trays and the like, wherein the adhesive is applied by the manufacturer thereof prior to shipment to the packager.

The present invention may be better understood through analysis of the following examples, which are non-limiting and are intended only to help explain the invention.

EXAMPLES

The adhesive samples were formed by combining the components together in a Brabender and heated at 160°C for about one hour. Phase separation or uniformity of the adhesive was observed and noted. °C = 5/9 x (F - 32), 1 inch = 2.54 cm, 1 pound = 453.59 g, 1 cP = 1 mPas.

Polyester-based resin is INGEO Biopolymers 6361D from NatureWorks. Non-functional polyolefin is an ethylene copolymer.

Functionalized polyolefin is a maleic anhydride grafted polyethylene copolymer.

Tackifier is a mixture of rosin ester, terpene-phenolic, styrenated terpenes.

Wax is a Fischer-Tropsch wax having a congeal point of about 97°C and/or a hydrogenated soybean oil glycerides having a Mettler dropping point of 158°F, measured in accordance with AOCS Cc 18-80.

Plasticizer is CITRIFLEX A4 from Vertellus.

Antioxidant is a mixture Irganox 1010 or Irgafos 168 from BASF.

Adhesion test - A single fluted cardboard paper were cut into 2"x3" substrates. A molten bead of hot melt at 320°F to 350°F was drawn across the middle (along the width) of the substrate. A second substrate was then immediately superimposed upon the first, with the adhesive placed in between, and a 50g weight was placed on top of the construction for five seconds. The construction was then conditioned for 24 hours at room temperature, and then stored a testing temperature (135°F, room temperature or 40°F) for 24 hours. After the 24 hour storage, the samples were stressed by hand at the storage temperature in a 90° peel mode. The presence or absence of fiber tear was then noted.

Aging condition test (thermal stability test) - A 100g sample was placed in an 8 oz clear glass jar with an opening of 2.375 inch inner diameter. The opening of the glass jar was covered with aluminum foil. The jar was then placed in a 350°F preheated Blue M benchtop oven (Blue M Electric Company). The jar remained in the oven for 24 hour interval, up to 3 intervals (up to 72 hours). At each interval, the jar was then taken out of the oven, placed in ambient condition and the viscosity was measured.

Observation - The adhesive was examined to determine whether the sample was uniform (homogeneous throughout the jar) or phase-separated (as distinct separate layers in the jar). This observation was made directly after making the sample and also after each interval during the aging test.

Viscosity - Viscosity of the adhesive samples were measured with a Brookfield Viscometer, spindle 27. The sample viscosities were measured directly after making the adhesive, and 24 hours and 72 hours after exposure to the aging condition.

Adhesives in Table 1 were made in accordance with the teachings in U.S.

Patent Numbers 5,169,889 and 5,252,646). When the adhesives were tested under the aging conditions, the viscosity of the adhesive decreased from 36 - 96% from the original viscosity.

Table 1

|  | USPN 5,169,889 Example IV | USPN 5,252,646 Example 7 | USPN 5,252,646 Example 9 |
|---|---|---|---|
| Polylactic acid or polyester of 3-hydroxybutyric and 3-hydroxyvaleric acid | 40 | 50 | 50 |
| Tackifier (rosin or phenyl ether of polyethylene glycol) | 60 | 50 | 50 |

(continued)

|  | USPN 5,169,889 Example IV | USPN 5,252,646 Example 7 | USPN 5,252,646 Example 9 |
|---|---|---|---|
| antioxidant | 0.1 | 0.2 | 0.2 |
| **Stability test** |  |  |  |
| Viscosity at 300°F initial (cP) | 24000 | -- | -- |
| Viscosity at 350°F initial (cP) |  | 335 | 4125 |
| Viscosity at 300°F after 24hrs (cP) | 15300 | - - | -- |
| Viscosity at 350°F after 72hrs (cP) | -- | 15 | 175 |

The components to adhesives samples in Table 2 are listed below.

Table 2

|  | Comparative A | Comparative B | Sample 1 |
|---|---|---|---|
| Polyester-based resin | 44 | 30 | 30 |
| Polyolefin |  | 25 |  |
| Functionalized polyolefin |  |  | 25 |
| Tackifier | 40 | 30 | 30 |
| Wax | 10 | 14 | 14 |
| Plasticizer | 5 |  |  |
| antioxidant | 1 | 1 | 1 |
| **Initial observation** | Phase separated | Phase separated | Uniform |
| **Adhesion** |  |  |  |
| 135F | none | none | Fiber tear |
| 73°F | none | none | Fiber tear |
| 40°F | none | none | Fiber tear |
| **Stability test** |  |  |  |
| Viscosity at 320°F initial (cP) | -- | -- | 1890 |
| Viscosity at 320°F after 24hrs (cP) | -- | -- | 1835 |
| Viscosity at 320°F after 72hrs (cP) | -- | -- | 1840 |

Comparative Adhesive Samples A and B phase separated. Stability test was not conducted on phase separated adhesives. Unlike the comparative samples, Adhesive Sample 1 was uniform. Moreover, Adhesive Sample 1 had good adhesion to fiberboards at high, low and room temperatures. In addition, the viscosity of Sample 1 remained relatively unchanged even after aging at 320°F for 72 hours, and changed less than 30%.

The components to adhesives samples in Table 3 are listed below.

Table 3

|  | Sample 2 | Sample 3 | Sample 4 | Sample 5 |
|---|---|---|---|---|
| Polyester-based resin | 9 | 40 | 50 | 58.5 |
| Functionalized polyolefin | 1 | 12 | 8 | 4.8 |
| Tackifier | 45 | 20 | 13 | 7.0 |
| Non-functionalized polyolefin | 28 | 13 | 16 | 19.5 |

(continued)

| | Sample 2 | Sample 3 | Sample 4 | Sample 5 |
|---|---|---|---|---|
| Wax | 16 | 14 | 12 | 9.2 |
| antioxidant | 1 | 1 | 1 | 1.0 |
| **Initial observation** | uniform | uniform | uniform | uniform |
| **Adhesion** | | | | |
| 135°F | Fiber tear | Fiber tear | Fiber tear | No fiber tear |
| 73°F | Fiber tear | Fiber tear | Fiber tear | Fiber tear |
| 40°F | Fiber tear | -- | Fiber tear | Fiber tear |
| **Stability test** | | | | |
| Viscosity at 320F initial (cP) | 810 | 2685 | 7475 | 23350 |
| Viscosity at 320F after 24hrs (cP) | 770 | 2595 | 6800 | 20000 |
| Viscosity at 320F after 72hrs (cP) | -- | 2480 | -- | -- |
| **Observation after stability test** | uniform | uniform | uniform | uniform |

Samples 2-5 were uniform, had good fiber tear in at least two temperature conditions, and remained shelf stable under aging conditions for at least 72 hours. Samples 2-5 were uniform and remained uniform even after exposure to aging condition. Table 3 demonstrates that adhesives with wide range of viscosity can be made to suit different application conditions.

The components to adhesives samples in Table 4 are listed below.

Table 4

| | Comparative C | Comparative D | Sample 6 |
|---|---|---|---|
| Polylactic acid | 25 | 25 | 25 |
| Functionalized polyolefin | 20 | 20 | 28 |
| Rubber elastomer | 8 | 8 | 0 |
| Tackifier | 32 | 32 | 32 |
| Wax | 0 | 14 | 14 |
| Oil | 14 | 0 | 0 |
| Antioxidant | 1 | 1 | 1 |
| **Initial observation** | grainy (not smooth) | phase separated | uniform |
| **Stability test** | | | |
| Viscosity at 350°F initial (cP) | 3650 | Not tested | 1200 |
| **Set time** | >50 sec | Not tested | 6 sec |
| **Observation after stability test (24 hours)** | Phase separated | Remained phase separated | uniform |

The addition of a rubber elastomer with polylactic acid formed a grainy or phase separated adhesive, immediately upon mixing or over time. Moreover, set time of the adhesive increases significantly with the addition of rubber with polylactic acid. Adhesive sample, Sample 6, forms a uniform adhesive and remains uniform after thermal stability test, with fast set (less than 10 seconds) properties.

**Claims**

1. A hot melt adhesive composition comprising:

(a) a polyester-based resin;
(b) a functionalized polyolefin or a functionalized wax;
(c) a tackifier, and
(d) a non-functionalized wax;

wherein the polyester-based resin is selected from the group consisting of homopolymer or copolymer of lactic acid, butylene succinate, butylene succinate-adipiate, butylene succinate-terephthalate, ethylene succinate, butylene succinate-carbonate, glycolic acid, caprolactone, hydroxybutyric acid-hydroxyvaleric acid and mixtures thereof,

wherein the functionalized polyolefin or the functionalized wax has been modified with a polar group by synthesizing an olefin-based chain, and then introducing a polar group later by either reaction or by grafting onto the olefin chain, and comprises a polar functional group selected from carboxylic acid group, acid anhydride group, amino group, imino group, hydroxyl group or epoxy group, and wherein the $(viscosity_{final} - viscosity_{initial})/viscosity_{initial}$ of the hot melt adhesive changes less than 30% after the hot melt adhesive is aged at 160 °C (320°F) for at least 72 hours, whereby the viscosity is determined at 160 °C by a Brookfield viscometer using a No. 27 spindle; and
wherein the adhesive is essentially free of any rubber-based elastomers.

2. The hot melt adhesive composition of claim 1, wherein the polyester-based resin is the homopolymer or copolymer of lactic acid, butylene succinate, hydroxybutyric acid or mixtures thereof.

3. The hot melt adhesive composition of claim 1, wherein the functionalized polyolefin is a homopolymer or a copolymer selected from $C_2$, $C_3$, $C_4$ and $C_8$ monomers.

4. The hot melt adhesive composition of claim 1, wherein the functionalized wax has monomers or comonomers selected from $C_2$, $C_3$, $C_4$ and $C_8$.

5. The hot melt adhesive composition of claim 1, wherein the polar functional group is selected from the group consisting of maleic anhydride, carboxylic acid, acrylic acid, maleic acid, ethyl acrylate, vinyl acetate, ethylene-glycidyl methacrylate, and mixtures thereof.

6. The hot melt adhesive composition of claim 1 further comprising antioxidants, stabilizers, plasticizer, fillers, additives, pigments, dyestuffs, polymeric additives, defoamers, preservatives, thickeners, rheology modifiers, humectants, nucleating agent, antiblock, processing aids, UV stabilizers, neutralizers, lubricants, surfactants and adhesion promoters.

7. A hot melt adhesive composition according to claim 1 comprising:

(a) 5 to 80 wt% of a polylactic acid;
(b) 0.1 to 25 wt% of a functionalized polyolefin or a functionalized wax;
(c) a tackifier;
(d) a non-functionalized wax; and
(e) up to 50 wt% of a polyolefin having $C_2$-$C_{20}$ monomers.

8. An article comprising a substrate and a composition comprising the adhesive of claim 8, which is a case, carton, tray, label, bookbinding, bag or disposable article.

9. A process for manufacturing an article comprising the steps of:

(a) forming an adhesive according to claim 1 at 135 °C (275°F) to 204.4 °C (400°F);
(b) applying the adhesive onto a substrate at 135 °C (275°F) to 204.4 °C (400°F); and
(c) applying a second substrate onto the applied adhesive,

wherein the substrate is a paper, paperboard, plastic film, metal foil, release paper, cotton, or nonwoven fabric.

# EP 3 189 115 B1

**Patentansprüche**

1. Schmelzklebstoffzusammensetzung, umfassend:

    (a) ein Harz auf Polyesterbasis;
    (b) ein funktionalisiertes Polyolefin oder ein funktionalisiertes Wachs;
    (c) einen Klebrigmacher und
    (d) ein nicht funktionalisiertes Wachs;

    wobei das Harz auf Polyesterbasis aus der Gruppe ausgewählt ist, die aus Homopolymer oder Copolymer von Milchsäure, Butylensuccinat, Butylensuccinat-Adipiat, Butylensuccinat-Terephthalat, Ethylensuccinat, Butylensuccinat-Carbonat, Glykolsäure, Caprolacton, Hydroxybuttersäure-Hydroxyvaleriansäure und Gemischen davon besteht,

    wobei das funktionalisierte Polyolefin oder das funktionalisierte Wachs mit einer polaren Gruppe durch Synthetisieren einer Kette auf Olefinbasis modifiziert wurde und dann später eine polare Gruppe entweder durch Umsetzung oder durch Pfropfen auf die Olefinkette eingeführt wurde, und eine polare funktionelle Gruppe umfasst, die aus Carbonsäuregruppe, Säureanhydridgruppe, Aminogruppe, Iminogruppe, Hydroxylgruppe oder Epoxygruppe ausgewählt ist, und wobei sich die (Viskosität$_{final}$ - Viskosität$_{initial}$)/Viskosität$_{initial}$ des Schmelzklebstoffs um weniger als 30 % ändert, nachdem der Schmelzklebstoff bei 160 °C (320 °F) für mindestens 72 Stunden gereift wird, wodurch die Viskosität bei 160 °C durch ein Brookfield-Viskosimeter unter Verwendung einer Spindel Nr. 27 bestimmt wird; und
    wobei der Klebstoff im Wesentlichen frei von beliebigen Elastomeren auf Kautschukbasis ist.

2. Schmelzklebstoffzusammensetzung nach Anspruch 1, wobei das Harz auf Polyesterbasis das Homopolymer oder Copolymer von Milchsäure, Butylensuccinat, Hydroxybuttersäure oder Gemischen davon ist.

3. Schmelzklebstoffzusammensetzung nach Anspruch 1, wobei das funktionalisierte Polyolefin ein Homopolymer oder ein Copolymer ist, das aus $C_2$-, $C_3$-, $C_4$- und $C_8$-Monomeren ausgewählt ist.

4. Schmelzklebstoffzusammensetzung nach Anspruch 1, wobei das funktionalisierte Wachs Monomere oder Comonomere aufweist, die aus $C_2$, $C_3$, $C_4$ und $C_8$ ausgewählt sind.

5. Schmelzklebstoffzusammensetzung nach Anspruch 1, wobei die polare funktionelle Gruppe aus der Gruppe ausgewählt ist, die aus Maleinsäureanhydrid, Carbonsäure, Acrylsäure, Maleinsäure, Ethylacrylat, Vinylacetat, Ethylenglycidylmethacrylat und Gemischen davon besteht.

6. Schmelzklebstoffzusammensetzung nach Anspruch 1, ferner umfassend Antioxidantien, Stabilisatoren, Weichmacher, Füllstoffe, Zusätze, Pigmente, Farbstoffe, Polymerzusätze, Entschäumer, Konservierungsmittel, Verdicker, Rheologiemodifikatoren, Feuchthaltemittel, Nukleierungsmittel, Antiblockmittel, Verarbeitungshilfsmittel, UV-Stabilisatoren, Neutralisatoren, Schmiermittel, Tenside und Haftvermittler.

7. Schmelzklebstoffzusammensetzung nach Anspruch 1, umfassend:

    (a) 5 bis 80 Gew.-% einer Polymilchsäure;
    (b) 0,1 bis 25 Gew.-% eines funktionalisierten Polyolefins oder eines funktionalisierten Wachses;
    (c) einen Klebrigmacher;
    (d) ein nicht funktionalisiertes Wachs; und
    (e) bis zu 50 Gew.-% eines Polyolefins, das $C_2$-$C_{20}$)-Monomere aufweist.

8. Erzeugnis, das ein Substrat und eine Zusammensetzung umfasst, die den Klebstoff nach Anspruch 8 umfasst, der eine Schachtel, ein Karton, eine Schale, ein Etikett, eine Buchbindung, eine Tasche oder ein Wegwerfartikel ist.

9. Verfahren zum Herstellen eines Erzeugnisses, die folgenden Schritte umfassend:

    (a) Ausbilden eines Klebstoffs nach Anspruch 1 bei 135 °C (275 °F) bis 204,4 °C (400 °F);
    (b) Auftragen des Klebstoffs auf ein Substrat bei 135 °C (275 °F) bis 204,4 °C (400 °F); und
    (c) Auftragen eines zweiten Substrats auf den aufgetragenen Klebstoff,

wobei das Substrat ein Papier, eine Pappe, ein Kunststofffilm, eine Metallfolie, ein Trennpapier, Baumwolle oder ein Vliesstoff ist.

**Revendications**

1. Composition d'adhésif thermofusible comprenant :

   (a) une résine à base de polyester ;
   (b) une polyoléfine fonctionnalisée ou une cire fonctionnalisée ;
   (c) un agent collant, et
   (d) une cire non fonctionnalisée ;

   la résine à base de polyester étant choisie dans le groupe consistant en homopolymère ou copolymère d'acide lactique, succinate de butylène, succinate-adipiate de butylène, succinate-téréphtalate de butylène, succinate d'éthylène, succinate-carbonate de butylène, acide glycolique, caprolactone, acide hydroxybutyrique-acide hydroxyvalérique et leurs mélanges,

   la polyoléfine fonctionnalisée ou la cire fonctionnalisée ayant été modifiée avec un groupe polaire en synthétisant une chaîne à base d'oléfine, puis en introduisant ultérieurement un groupe polaire soit par réaction, soit par greffage sur la chaîne oléfinique, et comprenant un groupe fonctionnel polaire choisi parmi un groupe acide carboxylique, un groupe anhydride d'acide, un groupe amino, un groupe imino, un groupe hydroxyle ou un groupe époxy, et la (viscosité$_{finale}$ - viscosité$_{initiale}$)/viscosité$_{initiale}$ de l'adhésif thermofusible change de moins de 30 % après le vieillissement de l'adhésif thermofusible à 160 °C (320 °F) pendant au moins 72 heures, moyennant quoi la viscosité est déterminée à 160 °C par un viscosimètre Brookfield en utilisant une broche n° 27 ; et l'adhésif étant essentiellement exempt de tout élastomère à base de caoutchouc.

2. Composition adhésive thermofusible selon la revendication 1, la résine à base de polyester étant l'homopolymère ou le copolymère d'acide lactique, le succinate de butylène, l'acide hydroxybutyrique ou des mélanges de ceux-ci.

3. Composition adhésive thermofusible selon la revendication 1, la polyoléfine fonctionnalisée étant un homopolymère ou un copolymère choisi parmi les monomères en $C_2$ , $C_3$ , $C_4$ et $C_8$.

4. Composition adhésive thermofusible selon la revendication 1, la cire fonctionnalisée ayant des monomères ou des comonomères choisis parmi $C_2$ , $C_3$ , $C_4$ et $C_8$.

5. Composition adhésive thermofusible selon la revendication 1, le groupe fonctionnel polaire étant choisi dans le groupe constitué par l'anhydride maléique, l'acide carboxylique, l'acide acrylique, l'acide maléique, l'acrylate d'éthyle, l'acétate de vinyle, l'éthylène-méthacrylate de glycidyle et leurs mélanges.

6. Composition adhésive thermofusible selon la revendication 1, comprenant en outre des antioxydants, des stabilisants, des plastifiants, des charges, des additifs, des pigments, des colorants, des additifs polymères, des antimousses, des conservateurs, des épaississants, des modificateurs de rhéologie, des humectants, un agent de nucléation, un antiblocage, des auxiliaires de traitement, des stabilisants UV, des neutralisants, des lubrifiants, des tensioactifs et des promoteurs d'adhérence.

7. Composition adhésive thermofusible selon la revendication 1 comprenant :

   (a) 5 à 80 % en poids d'un acide polylactique ;
   (b) 0,1 à 25 % en poids d'une polyoléfine fonctionnalisée ou d'une cire fonctionnalisée ;
   (c) un agent collant ;
   (d) une cire non fonctionnalisée ; et
   (e) jusqu'à 50 % en poids d'une polyoléfine ayant des monomères en $C_2$-$C_{20}$.

8. Article comprenant un substrat et une composition comprenant l'adhésif selon la revendication 8, qui est un étui, un carton, un plateau, une étiquette, une reliure, un sac ou un article jetable.

9. Procédé de formation d'un article, comprenant les étapes consistant à :

(a) former un adhésif selon la revendication 1 entre 135 °C (275 °F) et 204,4 °C (400 °F) ;
(b) appliquer l'adhésif sur un substrat entre 135 °C (275 °F) et 204,4 °C (400 °F) ; et
(c) appliquer un second substrat sur l'adhésif appliqué,

le substrat étant un papier, un carton, un film plastique, une feuille métallique, un papier anti-adhésif, du coton ou un tissu non tissé.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9510577 A
- US 5252646 A
- US 5312850 A
- US 5169889 A
- WO 2013162059 A